# EUROPEAN PATENT APPLICATION

(11) **EP 2 276 133 A1**
(43) Date of publication of application: **19.01.2011**
(21) Application number: 08874547.6
(22) Date of filing: 18.12.2008
(51) Int. Cl.: H02G 3/22, B60R 16/02, H01B 17/58

(54) **GROMMET**

(30) Priority: 03.06.2008 JP 2008146297
(71) Applicant: Sumitomo Wiring Systems, Ltd., Yokkaichi-shi Mie 510-8503 (JP)
(72) Inventor: OKUHARA, Takashi, Yokkaichi-shi Mie 510-8503 (JP); SAKATA, Tsutomu, Yokkaichi-shi Mie 510-8503 (JP); UJITA, Satoshi, Yokkaichi-shi Mie 510-8503 (JP)
(74) Representative: Gendron, Vincent Christian
(86) International application number: PCT/JP2008/073058
(87) International publication number: WO 2009/147763

(57) **Abstract**

Even if a wire harness that passes a grommet is bent sharply, a vehicle body latch recess of the grommet is not deformed, thereby enhancing a sealing function. A grommet includes: an inner tube for passing electrical cables in said wire harness in a close contact manner; and an outer tube continued to an outer peripheral surface of said inner tube and provided with a slant wall section. The slant wall section of the outer tube is provided with a curved portion at an outer diametrical position having an outer diameter corresponding to an inner diameter of the through-hole. The curved portion has a different inclination angle from the slant wall section. An inclination angle of an outer peripheral surface of the slant wall section at a larger diameter side with respect to the curved portion is set to be smaller than an inclination angle at a smaller diameter side with respect to the curved portion. A larger thickness portion is continued to a larger diameter end of the slant wall in parallel to an axial direction of the inner tube. A vehicle body latch recess is provided in an annual manner in an outer peripheral surface of a boundary area between the larger diameter end of the slant wall section and the larger thickness portion. A part from an inner peripheral surface of the larger thickness portion to an inner peripheral surface corresponding to the curved portion of the slant wall section extends in parallel to the axial direction of the inner tube. The part has a larger thickness. The slant wall section is provided on an outer peripheral surface with a plurality of stepped projecting ribs that extend from a smaller diameter end of the slant wall section to the larger diameter end and are spaced apart from one another in a peripheral direction. The slant wall section is provided in an inner peripheral surface of each stepped projecting rib with a recess that extends along a whole longitudinal length of the each stepped projecting rib.

## Description

### FIELD OF THE INVENTION

This invention relates to a grommet and more particularly relates to a grommet that is mounted on a wire harness to be wired in a motor vehicle and is attached to a through-hole in a vehicle body panel to protect, waterproof, and dustproof a portion of the wire harness inserted in the through-hole.

### BACKGROUND OF THE INVENTION

Heretofore, a wire harness to be wired from an engine room in a motor vehicle to a passenger room mounts a grommet, and the grommet is attached to a through-hole provided in a vehicle body panel for partitioning a vehicle body of the motor vehicle into the engine room and the passenger room so as to protect the wire harness passing the through-hole and to waterproof, dustproof, and sound-insulate from an engine room side to a passenger room side.

The present applicant has proposed a so-called one-motion type grommet in which a vehicle body latch recess provided on an outer peripheral surface is engaged with an peripheral edge around the through-hole merely by pushing the grommet into the through-hole in the vehicle body panel from a one side.
As shown in Figure 8A, an one-motion type grommet 100 disclosed in JP 2002-171647 A (Patent Document 1) is mounted on a wire harness W/H, the grommet 100 is attached to a through-hole 3 in a vehicle body panel 2 that partitions a vehicle body into an engine room X and a passenger room Y merely by pushing the wire harness into the through-hole 3 at the engine room X, and the wire harness W/H is drawn out from the engine room X to the passenger room Y. That is, a side of the engine room X across the panel 2 defines a pushing-in side P1 for the wire harness W/H while a side of the passenger room Y across the panel 2 defines a drawing-out side P2 for the wire harness W/H.

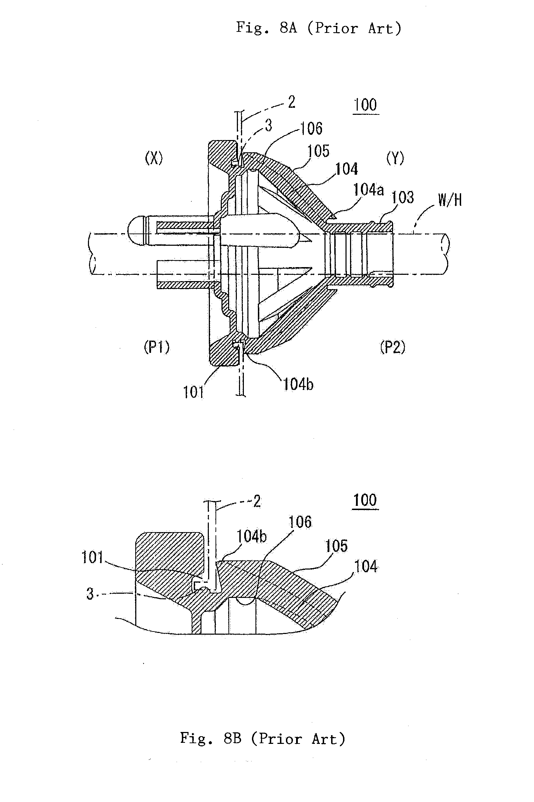

The grommet 100 includes a smaller diameter tubular section 103 through which the wire harness W/H passes in a close contact manner, and an enlarging diameter tubular section 104 provided on a pushing-in side end of the section 103. A smaller diameter end 104a of the enlarging diameter section 104 is continued to the pushing-in side end of the smaller diameter tubular section 103. A vehicle body latch recess 101 is provided on an outer peripheral surface of an enlarging diameter end 104b of the section 104.
When the grommet 100 is inserted into and attached to the through-hole 3 in the vehicle body panel 2, the smaller diameter tubular section 103 is inserted into the through-hole 3, the wire harness W/H is pushed into the drawing-out side P2 from the pushing-in side P1. Then, the enlarging diameter tubular section 104 is deflected inward and a peripheral edge around the through-hole 3 falls down in the vehicle body latch recess 101. Consequently, the grommet 100 is engaged with the vehicle body panel 2.
At this time, the enlarging diameter tubular section 104 is provided on an outer slant peripheral surface with stepped projecting ribs 105 in a peripheral direction, thereby reducing a contact area between the grommet 100 and the inner peripheral surface of the through-hole 3 to lower an inserting resistance. As shown in Figure 8B, a deep recess 106 is formed in an inner peripheral surface from a bottom surface side of the vehicle body latch recess 101 to a larger diameter side of the slant wall section so as to facilitate to deflect the slant wall section inward. This can reduce an inserting force.

The above one-motion type grommet 100 can be mounted on the through-hole 3 in the vehicle body panel 2 merely by pushing the grommet 100 from the engine room side.
In addition, since the enlarging diameter tubular section 104 is provided on the outer peripheral surface with the projecting ribs 105, there is an advantage for reducing the inserting force of the grommet 100.

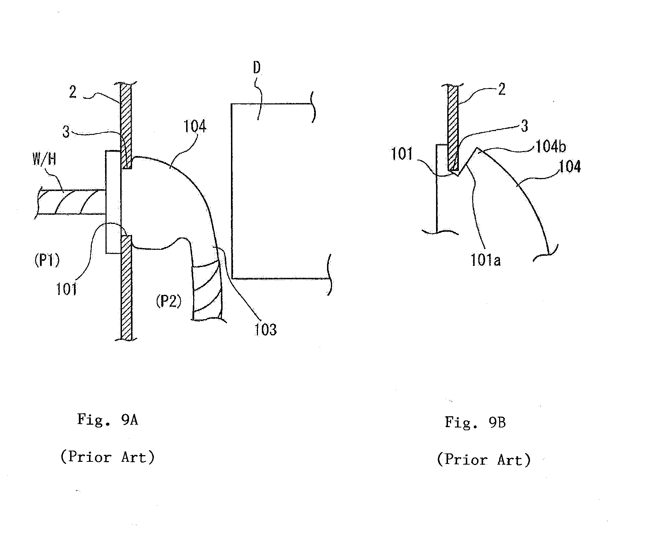

Currently, a wiring space for the wire harness has been decreased in association with an abruptly increase of electrical equipments to be installed in a motor vehicle. Consequently, as shown in Figure 9A, the wire harness W/H that passes the through-hole 3 in the vehicle body panel 2 will interfere with an electrical equipment D, if the wire harness W/H is arranged straightly. In particular, since electrical equipments to be installed in an instrument panel, from which the wire harness is drawn out in the passenger room, has been increased significantly, there will be a possibility that the wire harness W/H is bent at an angle of 90 (ninety) degrees, as shown in Figure 11A. Similarly, there will be a possibility that the wire harness may be bent at the angle of 90 degrees in the engine room.

If the wire harness W/H is bent at the angle of 90 degrees, as shown in Figure 9A, the smaller diameter tubular section 103 closely mounted on the wire harness W/H is also bent. The enlarging diameter tubular section 104 continued to the smaller diameter tubular section 103 is pulled in a bending direction, and the vehicle body latch recess 101 provided on the enlarging diameter tubular section 104 is also pulled. Consequently, as shown in Figure 9B, a slant wall side surface 101a of the vehicle body latch recess 101 is deformed to float up. Thus, there is a possibility that any deleterious effect will be applied to a sealing function between the inner peripheral surface of the through-hole 3 and the recess 101. If the vehicle body latch recess 101 is provided in the inner peripheral surface with the deep recess 106 described above, stiffness of the vehicle body latch recess 101 will be lowered. Consequently, there is a problem that the vehicle body latch recess 101 is easily deformable.

If reduction of an inserting force of the grommet into the vehicle body takes precedence over the other things, the vehicle body latch recess will be easily deformable on account of the bending of the wire harness after the grommet is attached to the vehicle body. This will be susceptible to improvement.

Patent Document 1: JP 2002-171647 A

### SUMMARY OF THE INVENTION

### PROBLEMS THAT THE INVENTION IS TO SOLVE

In view of the above problems, an object of the present invention is to provide a grommet that can reduce an inserting force when the grommet is attached to a through-hole in a vehicle body panel, and that can prevent a vehicle body latch recess from being deformed, thereby maintaining a good sealing function, even if a wire harness is bent in arrangement after the wire harness passes the through-hole.

### MEANS FOR SOLVING THE PROBLEMS

In order to achieve the above object, the present invention is directed to a grommet that is mounted on a wire harness to be inserted into a through-hole in a vehicle body, is engaged with a vehicle body, and is made of an elastic material. The grommet includes: an inner tube for passing electrical cables in said wire harness in a close contact manner; and an outer tube continued to an outer peripheral surface of said inner tube and provided with a slant wall section. The slant wall section of the outer tube is provided with a curved portion at an outer diametrical position having an outer diameter corresponding to an inner diameter of the through-hole. The curved portion has a different inclination angle from the slant wall section. An inclination angle of an outer peripheral surface of the slant wall section at a larger diameter side with respect to the curved portion is set to be smaller than an inclination angle at a smaller diameter side with respect to the curved portion. A larger thickness portion is continued to a larger diameter end of the slant wall in parallel to an axial direction of the inner tube. A vehicle body latch recess is provided in an annual manner in an outer peripheral surface of a boundary area between the larger diameter end of the slant wall section and the larger thickness portion. A part from an inner peripheral surface of the larger thickness portion to an inner peripheral surface corresponding to the curved portion of the slant wall section extends in parallel to the axial direction of the inner tube. The part has a larger thickness. The slant wall section is provided on an outer peripheral surface with a plurality of stepped projecting ribs that extend from a smaller diameter end of the slant wall section to the larger diameter end and are spaced apart from one another in a peripheral direction. The slant wall section is provided in an inner peripheral surface of each stepped projecting rib with a recess that extends along a whole longitudinal length of each stepped projecting rib.

In the grommet disclosed in Patent Document 1, the recess 106 that shaves the inner peripheral surface of the larger diameter end of the slant wall section serves to reduce the inserting force of the grommet. However, in the grommet of the present invention, the recess 106 is eliminated. That is, the part from the inner peripheral surface of the larger thickness portion to an inner peripheral surface corresponding to the curved portion of the slant wall section extends in parallel to the axial direction of the inner tube. The part has a larger thickness. Thus, the grommet can enhance strength enough to surely hold the vehicle body latch recess. On the other hand, to eliminate the recess 106 will involve reduction of the inserting force. However, the slant wall section is provided in an inner peripheral surface of each stepped projecting rib with the recess that extends through a whole longitudinal length of each stepped projecting rib. Since the projecting ribs that protrude from the outer surface of the slant wall section are provided in order to decrease a contact area between the slant wall section and the through-hole, it is possible to decrease the contact area by bringing the top surfaces of the projecting ribs into contact with the inner peripheral surface of the through-hole, as is the same case with Patent Document 1. This can maintain a stable inserting position of the grommet. Since each projecting rib is provided in its inner peripheral surface with the recess, each projecting rib is deformable inward, thereby reducing the inserting force. In addition, since the inclination angle of the slant angle is small at the larger diameter side from the curved portion of the slant wall section and the inclination angles of the projecting ribs that protrude on the outer peripheral surface of the slant wall section are also small, it is possible to surely decrease the inserting force.

Thus, since the thickness of the vehicle body latch recess is large while intending to decrease the inserting force of the grommet, the vehicle body latch recess hardly deforms thereby obtaining a good sealing function, even if the wire harness is sharply bent when the grommet is attached to the vehicle body.
It is preferable that the number of the projecting ribs is 4 to 8 (four to eight), but 6 (six) is most preferable.

Preferably, a depth of the recess provided in each projecting rib is set to be 30 to 50 % (thirty to fifty percent) of a thickness of the slant wall section from an inner peripheral surface of the slant wall section to a top surface of the projecting rib.
A decrease of the inserting force can be compatible with a prevention in deformation of the vehicle body latch recess after mounting the grommet on the vehicle body by setting the depth of the recess within the above range.

Preferably, the annular coupling section protrudes from an outer peripheral surface of the inner tube at an intermediate part between both ends of the inner tube at a pushing-in side and a drawing-out side in a longitudinal direction. The larger thickness portion of the outer tube is continued to an outer end of the annular coupling section. An inner peripheral surface at the smaller diameter end side of the slant wall section is spaced apart through a given clearance from the outer peripheral surface of the inner tube, An end of the inner tube at the drawing-out side protrudes outward from the slant wall section.
The slant wall section may be provided on its smaller diameter end with the drawing-out distal end side tubular section that extends in parallel to the axial direction of the inner tube, and the above separated clearance may be defined between the inner peripheral surface of the drawing-out distal end side tubular section and the outer peripheral surface of the inner tube.

That is, the inner tube of the grommet through which the wire harness passes in a close contact manner is separated through the great clearance from the outer tube in which the vehicle body latch recess is provided.
In this separated type grommet, even if the wire harness that is drawn out from the grommet and is arranged in the passenger room is bent sharply by an angle of about 90 degrees and the inner tube is deformed to follow the bending of the wire harness, it is possible not to directly transmit the deformation of the inner tube to the outer tube. Also, since the inner tube is coupled to the outer tube through the annular coupling section provided on the intermediate part of the inner tube apart from the drawing-out side in the longitudinal direction, the annular coupling section also can absorb the deformation of the inner tube and the deformation effect is not applied to the vehicle body latch recess provided on the larger diameter end side of the outer tube.

Preferably, in the separated type grommet, the annular coupling section protrudes slant from a coupling part with the inner tube toward the pushing-in side. A pushing rib protrudes from a slant portion of the annular coupling section toward an inner surface of the slant wall section of the outer tube. A bending stress absorbing portion is disposed at a side of the curved portion over a position on the slant wall section with which the pushing rib contacts.

When the grommet is inserted into the through-hole in the vehicle body panel, a working person holds and pushes the wire harness at the pushing-in side of the inner tube. Since the inner tube is coupled through the annular coupling section to the outer tube, the pushing force is hardly transmitted to the slant wall section at the drawing-out side of the outer tube. Thus, the pushing rib protrudes from the annular coupling section, and the pushing rib contacts with the inner peripheral surface of the slant wall section at the drawing-out side to transmit the pushing force to the slant wall section, thereby enhancing workability of inserting the grommet.
Since the annular coupling section has a smaller thickness and does not protrude directly in the radial direction but slants in the axial direction, when the inner tube is deformed on account of the bending of the wire harness, the annular coupling section can absorb the deformation, so that the deformation does not affect the outer tube. Thus, even if the wire harness is sharply bent at the pushing-in side in the engine room side, the annular coupling section can absorb the deformation of the wire harness, so that the vehicle body latch recess provided in the outer tube is not deformed.

Preferably, the annular coupling section is formed into a V-shaped configuration that slants from the inner tube to the pushing-in side and then to the drawing-out side. This V-shaped configuration can increase an amount of absorbing the deformation in the annular coupling section when the inner tube is bent on account of the bending of the wire harness.
It is preferable that the pushing rib is continuous in its peripheral direction. This enables to uniform the pushing force to the slant wall section. It is preferable that a thickness of the pushing rib is set to be 2 to 4 (two to four) times of a thickness of the annular coupling section and to be larger than a thickness of the slant wall section.

It should be noted that the present invention is not limited to the separated type grommet. The present invention can be applied to the coupled type grommet shown in Figure 8A wherein the smaller diameter end of the slant wall section is continued through the annular coupling section to the inner tube.
Even if the inner tube of the coupled type grommet is deformed in connection with the bending of the wire harness, since it is possible to enhance strength of the vehicle body latch recess and to positively support the recess, thereby keeping a good sealing function.

### EFFECTS OF THE INVENTION

As described above, according to the present invention, even if the wire harness is bent sharply to deform the inner tube, since the part around the vehicle body latch recess of the outer tube has a large thickness and the part can hold the latch recess positively, the vehicle body latch recess hardly deform, thereby keeping a good sealing function. In addition, since the projecting ribs on the outer tube are provided in the inner peripheral surfaces with recesses, it is possible to reduce the inserting force of the grommet.

### BRIEF EXPLANATION OF THE DRAWINGS

[Fig. 1] Figure 1A is a perspective view of a first embodiment of a grommet in accordance with the present invention taken from a drawing-out side. Figure 1B is a perspective view of the grommet of the present invention taken from a pushing-in side.
[Fig. 2] Figure 2 is a plan view of the grommet shown in Figure 1, illustrating the grommet taken from the drawing-out side.
[Fig. 3] Figure 3 is a longitudinal section view of the grommet taken along lines III-III in Figure 2.
[Fig. 4] Figure 4 is a longitudinal section view of the grommet taken along lines IV-IV in Figure 3.
[Fig. 5] Figure 5 is a longitudinal section view of the grommet similar to Figure 3, illustrating the grommet into which a wire harness is inserted and that is attached to a vehicle body.
[Fig. 6] Figure 6A is a schematic side elevation view of the grommet in the case where the wire harness is bent at the drawing-out side of the grommet. Figure 6B is a schematic side elevation view of the grommet in the case where the wire harness is bent at the pushing-in side of the grommet.
[Fig. 7] Figure 7 is a longitudinal section view of a second embodiment of the grommet in accordance with the present invention.
[Fig. 8] Figure 8A is a longitudinal section view of a prior art grommet. Figure 8B is a longitudinal section view of a part of the prior art grommet shown in Figure 8A.
[Fig. 9] Figures 9A and 9B are explanatory views that illustrate problems in the prior art grommet.

### EXPLANATION OF SIGNS

- 1:: grommet
- 2:: vehicle body panel
- 3:: through-hole
- 5:: inner tube
- 6:: annular coupling section
- 8:: outer tube
- 9:: larger thickness portion
- 10:: vehicle body latch recess
- 11:: slant wall section
11h: horizontal surface portion
- 15:: projecting ribs
15h: recesses
- 18:: pushing rib

### PREFERRED ASPECTS OF EMBODYING THE INVENTION

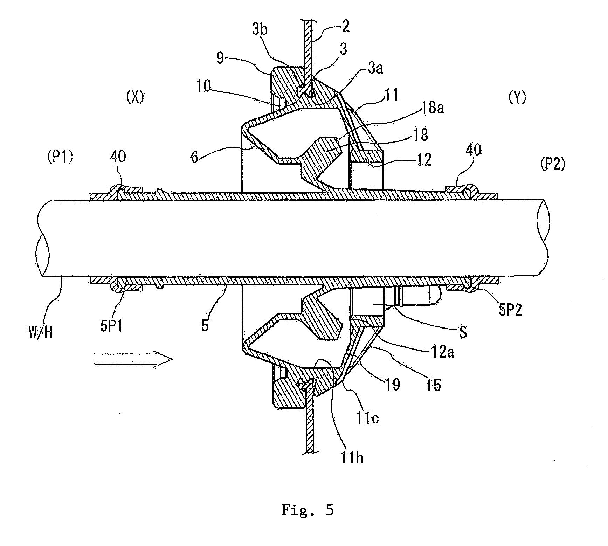

Referring now to the drawings, embodiments of a grommet in accordance with the present invention will be described below.

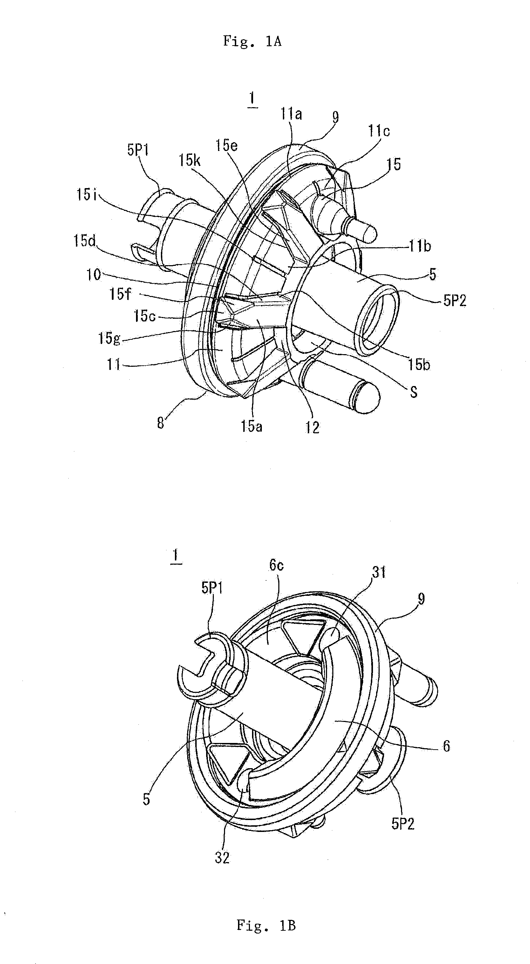

Figures 1A to 6B show a first embodiment of a grommet in accordance with the present invention.
As shown in Figure 5, a grommet 1 is mounted on a wire harness W/H arranged from an engine room X in a motor vehicle via a through-hole 3 in a vehicle body panel 2 to a passenger room Y. The grommet 1 is engaged with a peripheral edge around the through-hole 3 to be attached to the vehicle body. The grommet 1 is a one-motion type grommet that is inserted into the through-hole 3 from an engine room X so as to be attached to the vehicle body. The one end of the grommet 1 defines a pushing-in side P1 while the other end defines a drawing-out side P2. The grommet 1 is molded from rubber or elastomer.

The grommet 1 in the first embodiment is a separated type grommet in which a clearance is defined between a smaller diameter end of a slant wall section and an inner tube.
The grommet 1 includes an inner tube 5 having a smaller diameter and permitting a set of electrical cables in the wire harness W/H to pass, an annular coupling section 6 that protrudes from an outer peripheral surface 5a on an intermediate part of the inner tube 5 between a pushing-in end 5P1 at the pushing-in side P1 and a drawing-out end 5P2 at the drawing-out side P2 in a longitudinal direction of the inner tube 5, and an outer tube 8 having a larger diameter and continued to an outer peripheral surface of the annular coupling section 6.

The outer tube 8 is coaxial with the inner tube 5 and is disposed through a space on an intermediate part of the inner tube 5 in its longitudinal direction. The inner tube 5 protrudes from opposite ends of the outer tube 8 at the pushing-in side P1 and the drawing-out side P2 in the longitudinal direction.
The outer tube 8 extends to the drawing-out side P2 from a connecting part between the outer tube 8 and an outer peripheral surface of the annular coupling section 6. A slant wall section 11 is continued to a larger thickness portion 9 and extends to the drawing-out side P2 to reduce a diameter of the portion 11 in the axial direction. An annular vehicle body latch recess 10 is provided in an outer peripheral surface on a boundary area between the larger thickness portion 9 and a larger diameter end of the slant wall section 11. The slant wall section 11 is provided on its distal end with a drawing-out distal end side tubular portion 12 that extends in parallel to the axial direction of the inner tube 5.

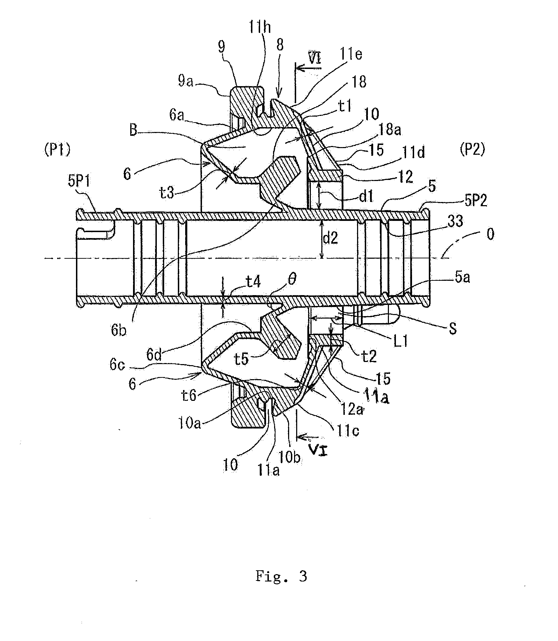

An annular clearance S (Figure 3) is defined between an inner peripheral surface of the drawing-out distal end side tubular portion 12 and the outer peripheral surface 5a of the inner tube 5 to separate the portion 12 apart from the inner tube 5. That is, a smaller diameter end of the outer tube 8 surrounds the outer peripheral surface of the inner tube 5 through the annular clearance S and the drawing-out side end 5P2 protrudes outward from the outer tube 8.

As shown in Figure 3, a radial distance d1 of the annular clearance S is set to be 1/2 to 3/2 (one-half to three-halves) of a radius d2 of the inner tube 5. It is preferable in the present embodiment that the radial distance d1 is 3/4 (three quarters) of the radius d2. A length L1 of the drawing-out distal end side tubular portion 12 that extends through the annular clearance S in parallel to the outer peripheral surface 5a of the inner tube 5 may be altered in accordance with a size of the grommet 1. It is preferable in the present embodiment that the length L1 is 5 to 15 mm (five to fifteen millimeters).

As shown in Figure 3, the larger thickness portion 9 of the outer tube 8 protrudes slightly toward the pushing-in side P1 from the connecting part between the larger thickness portion 9 and an outer peripheral end 6a of the annular coupling section 6. The pushing-in side distal end surface 9a defines an orthogonal surface to an axis O. The annular vehicle body latch recess 10 is provided between the larger diameter portion 9 and the larger diameter end of the slant wall section 11. A distal end of a drawing-out side surface 10b that stands up from a bottom surface 10a of the vehicle body latch recess 10 is continued to a larger diameter end 11a of the slant wall section 11. A curved portion 11c is provided between the larger diameter end 11a and the smaller diameter end 11b so as to change an inclination angle of the outer peripheral surface of the slant wall section 11. An inclination angle at the smaller diameter end side with respect to the curved portion 11c is set to be large while an inclination angle at the larger diameter end side with respect to the curved portion 11c is set to be small.

The slant wall section 11 is provided on the outer peripheral surface that changes the inclination angle with axially stepped projecting ribs 15 that extend from the larger diameter end 11a of the distal end of the drawing-out side surface 10b on the vehicle body latch recess 10 to the smaller diameter end 11b and are spaced apart from one another in the peripheral direction. Since these projecting ribs 15 have the same widths in the peripheral direction, the projecting ribs 15 that extend radially from the smaller diameter end to the larger diameter end have narrow distances between the adjacent ribs 15 at the smaller diameter end side in the peripheral direction and wide distances between the adjacent ribs 15 at the larger diameter end side.
An imaginary circle created by continuing the stepped projecting ribs 15 in the peripheral direction of the curved portion 11c is set to be equal to an inner diameter of the through-hole 3 in the vehicle body panel 2. In the present embodiment, the number of the stepped projecting ribs 15 is six (6) and the pitches of the ribs 15 are sixty (60) degrees.

As shown in Figure 3, the inner peripheral surface of the outer tube 8 from the larger thickness portion 9 to the curved portion 11c of the slant wall section 11, that is, from the larger thickness portion 9 to a larger diameter side end 11e defines a parallel surface 11h in parallel to the axial direction O. Thus, the parallel surface 11h is not provided with the recess 106 of the grommet disclosed in Patent Document 1. A thickness of the larger diameter side end 11e of the slant wall section 11 is set to be larger than that of the grommet disclosed in Patent Document 1. A thickness t1 of a portion 11d from the curved portion 11c to the drawing-out distal end side tubular portion 12 is set to be small. A thickness t2 of the drawing-out distal end side tubular portion 12 is set to be larger than the thickness t1.

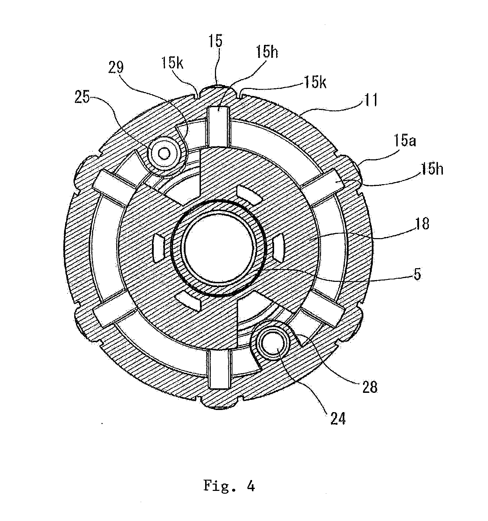

As shown in Figure 4, each projecting rib 15 that extends on the outer peripheral surface of the slant wall section 11 from the smaller diameter end of the slant wall section 11 to the larger diameter end is provided in an inner peripheral surface with a recess 15h that extends through a whole length of the projecting rib 15. A depth of the recess 15h is set to be 30 to 50 % (thirty to fifty percent) of a thickness from the inner peripheral surface of the projecting rib 15 to a top surface 15a of the rib 15.

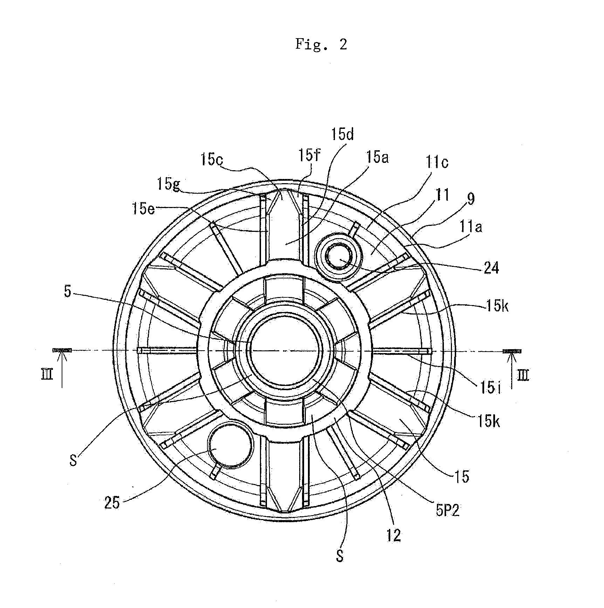

Further, as shown in Figures 1 and 2, the slant wall section 11 is provided with axial grooves 15k and 15i on an outer surface at proximal ends of each projecting rib 15 and on each central parts between the adjacent projecting ribs 15, thereby facilitating to deflect the slant wall section 11.

As shown in Figures 1A, each projecting rib 15 provided on its larger diameter side of the slant wall section 11 is provided with a slant surface 15c that inclines the top surface 15a of the projecting rib 15 downward to the drawing-out side surface 10b. Both side surfaces 15d and 15e of each projecting rib 15 at its distal end side across the slant surface 15c define slant surfaces 15f and 15g that approach to each other. That is, each projecting rib 15 is provided on its larger diameter end with the slant surfaces 15, 15f, and 15g that are cut at three sides. Thus, since the distal end surface of each projecting rib 15 is cut at the three sides to form round corners and to eliminate edges, the projecting ribs 15 are not caught by the peripheral edge around the through-hole 3 in the vehicle body panel 2 when the peripheral edge around the through-hole 3 drops down into the vehicle body latch recess 10.

As shown in Figures 3 and 4, the annular coupling section 6 that interconnects the outer tube 8 and inner tube 5 protrudes in a V-shaped configuration from an inner peripheral end 6b continued to the outer peripheral surface 5a of the inner tube 5 to the pushing-in side P1. The outer peripheral end 6a of the annular coupling section 6 is disposed at the pushing-in side P1 over the inner peripheral end 6b and is continued to the larger thickness portion 9 of the outer tube 8.
That is, although the smaller diameter side of the enlarging diameter tubular section is continued to the smaller diameter tubular section in the prior art one-motion type grommet 100 shown in Figures 8A and 8B, the larger diameter side of the outer tube 8 (corresponding to the enlarging diameter tubular section) is coupled through the annular coupling section 6 to the inner tube 5 in the grommet 1 of the present invention.

A thickness t3 (Figure 3) of the annular coupling section 6 is set to be substantially equal to or less than a thickness t4 (Figure 3) of the inner tube 5 so as to be deflectable. An angle θ of the annular coupling section 6 that is slant coupled to the outer peripheral surface of the inner tube 5 is set to be 20 to 30 (twenty to thirty) degrees. Thus, the inner tube 5 and outer tube 8 are not interconnected to each other directly in the radial direction but interconnected to each other through the V-shaped annular coupling section 6. Thus, when the inner tube 5 is deformed in connection with bending of the wire harness W/H, the annular coupling section 6 absorbs the deformation of the inner tube 5, so that the deformation of the inner tube 5 is not transmitted directly to the outer tube 8. This serves as a release portion.

As shown in Figure 3, the annular coupling section 6 is provided on its inclined portion between an inner peripheral end 6b and a V-shaped projecting end 6c with a bent portion 6d that is bent toward the slant wall section 11. A pushing rib 18 having a larger thickness protrudes from the bent portion 6d toward the slant wall section 11. As shown in Figure 4, the pushing rib 18 is continuous in its peripheral direction but it is divided at positions corresponding to guide inner tubes 28 and 29 for permitting an opener cable and a feed water hose to pass.

A thickness t5 (Figure 3) of the pushing rib 18 is large enough to be 2 to 4 (two to four) times of the thickness t3 of the annular coupling section 6, is larger than the thickness t1 of the slant wall section 11, and is substantially the same as the thickness of the larger thickness portion 9.
The reason why the pushing rib 18 is a larger thickness is ascribable to the fact that, when the grommet 1 is inserted into the through-hole 3 in the vehicle body panel 2, a projecting end 18a of the pushing rib 18 contacts with the inner peripheral surface of the slant wall section 11 to permit the pushing force to be transmitted to the outer tube 8. When the grommet 1 is attached to the vehicle body panel 2, the projecting end 18a of the pushing rib 18 is disposed near the slant wall section 11 so that they can contact with each other. Thus, a sound-insulating space B (Figure 3) is defined among the pushing rib 18, the inner tube 5, the annular coupling section 6, and the outer tube 8.

As shown in Figure 3, the pushing rib 18 protrudes slightly slant in its outer diametrical direction. The projecting end 18a is opposed to the smaller diameter end of the slant wall section 11 continued to the drawing-out distal end side tubular portion 12. The drawing-out distal end side tubular portion 12 is provided with a stopper projection 12a, which protrudes inward from the slant wall section 11, at a side of the slant wall section 11 with which the pushing rib 18 contacts. Since the stopper projection 12a is provided on the drawing-out distal end side tubular portion 12, it is possible to prevent the projecting end 18a of the pushing rib 18 from slipping down into the drawing-out distal end side tubular portion 12 and to surely bring the pushing rib 18 into contact with the slant wall section 11 so as to transmit the pushing force to the slant wall section 11.

Furthermore, the slant wall section 11 is provided with an annular shallow recess in an inner surface from an outer diameter side, with which the projecting end 18a of the pushing rib 18 contacts, to the bent portion 11c. Thus, the slant wall section 11 is provided with a smaller thickness portion 19 having a smaller thickness t6. Since the slant wall section 11 is provided with the smaller thickness portion 19 from the curved portion 11c to the smaller diameter side, the smaller thickness portion 19 serves as a stress absorbing portion when the drawing-out distal end side tubular portion 12 is deformed on account of the bending of the wire harness. That is, a bending stress is concentrated in the smaller thickness portion 19, so that the drawing-out distal end side tubular portion 12 is hard to transmit its deformation to the vehicle body latch recess 10. The thickness t6 of the smaller thickness portion 19 is smaller than the thickness t3 of the annular coupling section 6.

As shown in Figure 2, the slant wall section 11 of the outer tube 8 is provided with through-apertures 24 and 25 for two wire members (mentioned above) including an opener cable for releasing a bonnet and a feed water hose for a washer.
The smaller diameter inner tube 5, through which the wire harness W/H passes in a close contact manner, protrudes from the opposite ends of the outer tube 8 in the longitudinal direction. The inner tube 5 is provided on an inner peripheral surface of each protruding end portion over the outer tube 8 with three waterproofing lips 33 (Figure 3).

As shown in Figure 5, since the through-hole 3 in the vehicle body panel 2 for receiving the grommet 1 is an aperture with a burr 3b that protrudes from the peripheral edge 3a around the through-hole 3 to the pushing-in side P1, the vehicle body latch recess 10 in the outer tube 8 has a configuration corresponding to the burr 3b.

A process for attaching the wire harness W/H to the grommet 1 is carried out by inserting the electrical wires in the wire harness W/H while enlarging the inner peripheral surface of the inner tube 5 by a jig (not shown). After inserting the wire harness W/H into the inner tube 5, the wire harness W/H drawn out from the opposite ends 5P1 and 5P2 of the inner tube 5 and the opposite ends 5P1 and 5P2 are secured to one another by winding adhesive tapes 40 around them.

Varying sizes in diameter of the wire harness W/H are absorbed in the annular coupling section 6, so that the outer tube 8 connected through the annular coupling section 6 to the inner tube 5 is not subject to affections caused by the varying sizes. Accordingly, it is possible to maintain the outer diameter of the outer tube in a designed size. That is, since the annular coupling section 6 has a smaller thickness enough to be deformed and is formed into the V-shape, the annular coupling section 6 can respond to the varying sizes in diameter merely by changing the bending angle.

As shown in Figure 5, the grommet 1 mounted on the wire harness W/H is inserted into and attached to the through-hole 3 with the burr 3b in the vehicle body panel 2 that partitions a vehicle body into the engine room X and the passenger room Y.
A working of inserting the grommet 1 into the through-hole 3 is carried out by inserting the drawing-out end 5P2 of the inner tube 5 into the through-hole 3 from the engine room X, and then pushing the grommet 1 into the through-hole 3 by a working person in the engine room X while holding the wire harness W/H with the grommet 1 by the working person. The grommet 1 is latched in the through-hole 3 by an one-motion operation in which a pushing-in action is effected at one time from the one side.

Specifically, since the portion 11d of the smaller diameter side of the slant wall section 11 of the outer tube 8 is smaller than the inner diameter of the through-hole 3, the grommet 1 can be readily inserted into the through-hole 3. When the bent portion 11c of the slant wall section 11 reaches the inner peripheral surface 3a of the through-hole 3, the stepped projecting ribs 15 of the slant wall section 11 contact with the inner peripheral surface 3a, thereby causing an inserting resistance. Then, the outer tube 8 cannot be further pushed into the through-hole 3 easily from the inner peripheral surface 3a.
However, if the working person holds and pushes the wire harness W/H to be drawn out from the pushing-in side P1 of the inner tube 5, the inner tube 5 that closely contacts with the wire harness W/H is advanced to the drawing-out side P2 in the drawing-out direction. The pushing rib 18 of the annular coupling section 6 connected to the inner tube 5 is also advanced to the inner surface of the slant wall section 11 of the outer tube 8 by the movement of the inner tube 5 and the projecting end 18a of the pushing rib 18 bumps onto the inner peripheral surface of the slant wall section 11. Thus, since the slant wall section 11 is pushed and moved forward by the pushing rib 18, the outer tube 8 with the slant wall section 11 passes through the through-hole 3 to the passenger room Y.

When the pushing rib 18 pushes the slant wall section 11, since the projecting ribs 15 are provided on the outer peripheral surface of the slant wall 11 and the top surfaces 15a of the projecting ribs merely contact with the inner peripheral surface 3a of the through-hole 3 and the inner peripheral surface of the burr 3b, a contact area between the slant wall section 11 and the through-hole 3 is reduced, thereby lowering an inserting force. Further, since the recesses 15h are provided in the inner peripheral surfaces of the projecting ribs 15 so that stiffness of the projecting ribs are lowered to be deflectable inward, it is possible to reduce the inserting force and to avoid to cause an excessive inserting force in the curved portion 11c. Thus, although the parallel surface part 11h in parallel to the axial direction has a larger thickness at inner peripheral surfaces from the curved portion 11c of the slant wall section 11 to the vehicle body latch recess 10, it is possible to reduce the inserting force.

The pushing rib 18 presses the slant wall section 11 and the distal ends of the stepped projecting ribs 15 reach the inner peripheral surface 3a of the through-hole 3. Since each stepped projecting rib 15 is provided on the distal end with slant surfaces 15c, 15f, and 15g in three cut-away sides, the inner peripheral surface 3a of the through-hole 3 and the burr 3b fall down into the vehicle body latch recess 10 as if the stepped projecting ribs 15 fall down into the through-hole 3, and the grommet 1 can be secured to the vehicle body panel 2.

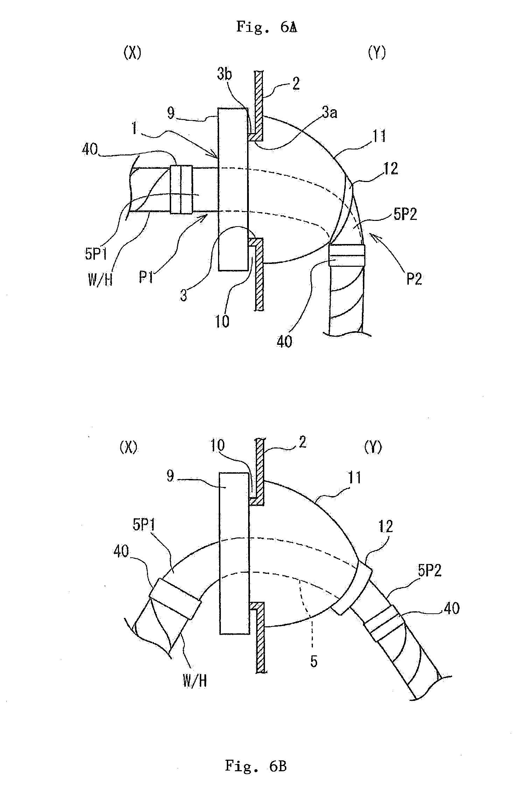

As described above, after the grommet 1 is secured to the vehicle body panel 2, as shown in Figure 6A, the wire harness W/H drawn out into the passenger room Y is sharply bent downward (or upward, rightward, or leftward) by an angle of 90 (ninety) degrees in many cases.
If the wire harness W/H is bent downward by the angle of 90 degrees, the wire harness W/H can closely contact with and pass through the inner tube 5, the inner tube 5 secured to the wire harness W/H by the adhesive tapes 40 follows the bending angle of the wire harness W/H, and the inner tube 5 is bent downward at the drawing-out end 5P2.

In this case, even if the drawing-out end 5P2 is bent downward in the grommet 1 of the present invention, the outer tube 8 is not coupled to the inner tube 5 at the drawing-out end 5P2 and the great clearance S exists between the drawing-out distal end side tubular portion 12 of the outer tube 8 and the inner tube 5. Thus, since the inner tube 5 is merely bent in the clearance S between the inner tube 5 and the outer tube 8, the outer tube 8 is not bent at the drawing-out side P2.
In the case where the wire harness W/H is bent sharply by the angle of 90 degrees or so, the inner tube 5 is greatly bent by the bending of the wire harness W/H, the bending will be transmitted through the annular coupling section 6 connected to the inner tube 5 to the outer tube 8. Even in this case, the V-shaped thin annular coupling section 6 will absorb the deformation of the inner tube 5.
Further, any recess is not formed in the inner peripheral surface of the slant wall section continued to the inner peripheral surface of the vehicle body latch recess 10 and the inner peripheral surface of the slant wall section defines the parallel surface part 11h in parallel to the axial direction, thereby enhancing a support force. Thus, it is possible to prevent the vehicle body latch recess 10 from floating up and to obtain a good sealing function.

On the other hand, if the wire harness W/H is bent at the pushing-in side P1 in the engine room X, it is possible for the annular coupling section 6 to absorb the bending of the wire harness W/H, thereby surely holding the vehicle body latch recess 10 in the through-hole 3. Thus, it is possible to prevent the vehicle body latch recess 10 from floating up on account of the bending affection and to prevent the sealing function from being lowered.

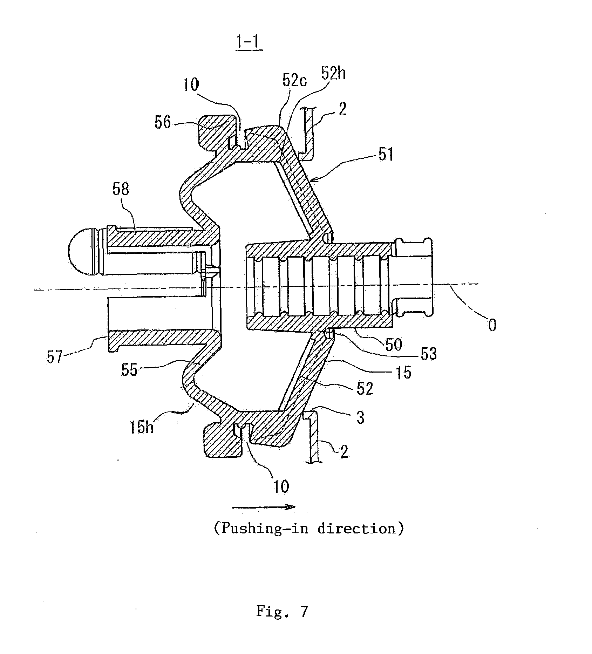

Figure 7 shows a second embodiment of a grommet 1-1 in accordance with the present invention.
The grommet 1-1 is a coupled type grommet in which a smaller diameter end of a slant wall section at a drawing-out side P2 is coupled to an inner tube, as is the case with the prior art grommet 100 shown in Figure 8A.
The grommet 1-1 includes a smaller diameter tubular section 50 corresponding to the inner tube 5 in the first embodiment, and an enlarging diameter tubular section 51 corresponding to the outer tube 8 in the first embodiment. The enlarging diameter tubular section 51 has a slant wall section 52 of which a smaller diameter end is connected to the smaller diameter tubular section 50 through an annular coupling portion 53.
The slant wall section 52 is provided with a curved portion 52c and stepped projecting ribs 15 that extend from a smaller diameter end to a larger diameter end of the section 52 and that are disposed radially on the section 52, as is the case with the first embodiment.
The slant wall section 52 is provided on the larger diameter end with a larger thickness portion 56 and in a boundary area between the larger thickness portion 56 and the slant wall section 52 with a vehicle body latch recess 10 in an annular manner.

A thin closing surface section 55 protrudes from an inner peripheral surface of the enlarging diameter tubular section 51 opposed to a bottom surface side of the vehicle body latch recess 10. The closing surface section 55 is divided on a central part in a diametrical direction to define a wire harness passing portion. The closing surface section 55 is formed into a thin V-shaped configuration that protrudes toward the pushing-in side P1. A smaller diameter tubular section 57 protrudes from the closing surface section 55 so that the section 57 contacts with the wire harness closely by a tape-winding manner. A guide pipe 58 for a feed water hose and a guide pipe for an opener cable (not shown) protrudes from the closing surface section 55.

In order to support the vehicle body latch recess 10 in the enlarging diameter section 51, a parallel surface part 52h extends from an inner peripheral surface corresponding to the vehicle body latch recess 10 to an inner peripheral surface of the curbed portion 52c in parallel with an axial direction O and is not provided with any recess.
The slant wall section 52 is provided with a recess 15h in an inner peripheral surface corresponding to each projecting rib 15 provided on the outer surface of the slant wall section 52, as is the case with the first embodiment.

When the wire harness is bent in the grommet 1-1 constructed above and the smaller diameter tubular section 50 is also bent, the bending will be transmitted to the slant wall section 52 coupled through the annular coupling portion 53 to the smaller diameter tubular section 50. However, since a part around the vehicle body latch recess 10 has a larger thickness and supports the slant wall section 51 positively, the vehicle body latch recess 10 does not follow the bending of the slant wall section 52, thereby preventing the vehicle body latch recess 10 from floating up.
Also, when the wire harness is bent at the pushing-in side in the engine room X, the smaller diameter tubular section 57 is bent. However, since the V-shaped closing surface section 55 can absorb the bending of the section 57, and the part around the vehicle body latch recess 10 has a larger thickness and supports the slant wall section 51 positively, the vehicle body latch recess 10 does not follow the bending of the slant wall section, thereby preventing the vehicle body latch recess 10 from floating up.

## Claims

1. A grommet that is mounted on a wire harness to be inserted into a through-hole in a vehicle body, is engaged with a vehicle body, and is made of an elastic material,
said grommet including:
an inner tube for passing electrical cables in said wire harness in a close contact manner; and
an outer tube continued to an outer peripheral surface of said inner tube and provided with a slant wall section;
wherein said slant wall section of said outer tube is provided with a curved portion at an outer diametrical position having an outer diameter corresponding to an inner diameter of said through-hole, said curved portion has a different inclination angle from said slant wall section, an inclination angle of an outer peripheral surface of said slant wall section at a larger diameter side with respect to said curved portion is set to be smaller than an inclination angle at a smaller diameter side with respect to said curved portion, a larger thickness portion is continued to a larger diameter end of said slant wall in parallel to an axial direction of said inner tube, and a vehicle body latch recess is provided in an annual manner in an outer peripheral surface of a boundary area between said larger diameter end of said slant wall section and said larger thickness portion; and
wherein a part from an inner peripheral surface of said larger thickness portion to an inner peripheral surface corresponding to said curved portion of said slant wall section extends in parallel to said axial direction of said inner tube, said part has a larger thickness, said slant wall section is provided on an outer peripheral surface with a plurality of stepped projecting ribs that extend from a smaller diameter end of said slant wall section to said larger diameter end and are spaced apart from one another in a peripheral direction, and said slant wall section is provided in an inner peripheral surface of each stepped projecting rib with a recess that extends along a whole longitudinal length of each stepped projecting rib.

2. A grommet according to Claim 1, wherein a depth of said recess provided in each projecting rib is set to be 30 to 50 % (thirty to fifty percent) of a thickness of said slant wall section from an inner peripheral surface of said slant wall section to a top surface of said projecting rib.

3. A grommet according to Claim 1 or 2, wherein said annular coupling section protrudes from an outer peripheral surface of said inner tube at an intermediate part between both ends of said inner tube at a pushing-in side and a drawing-out side in a longitudinal direction, said larger thickness portion of said outer tube is continued to an outer end of said annular coupling section, an inner peripheral surface at said smaller diameter end side of said slant wall section is spaced apart through a given clearance from said outer peripheral surface of said inner tube, and an end of said inner tube at said drawing-out side protrudes outward from said slant wall section.

4. A grommet according to Claim 3, wherein said annular coupling section protrudes slant from a coupling part with said inner tube toward said pushing-in side, a pushing rib protrudes from a slant portion of said annular coupling section toward an inner surface of said slant wall section of said outer tube, and a bending stress absorbing portion is disposed at a side of said curved portion over a position on said slant wall section with which said pushing rib contacts.

5. A grommet according to Claim 1 or 2, wherein said smaller diameter end of said slant wall section is continued through an annular coupling section to said inner tube.
